# EUROPEAN PATENT SPECIFICATION

(11) **EP 4 149 317 B1**
(45) Date of publication and mention of the grant of the patent: **17.07.2024**
(21) Application number: 21728628.5
(22) Date of filing: 10.05.2021
(51) Int. Cl.: A45B 3/00, A45B 11/00, A45C 11/20, A45C 13/40, A45C 15/00, A45B 23/00, A45C 5/14

(54) **CASE**
KOFFER
BOÎTIER

(30) Priority: 13.05.2020 IT 202000010948
(43) Date of publication of application: 22.03.2023
(73) Proprietor: Holos Pharm Sagl, 6900 Lugano (CH)
(72) Inventor: GIANNOTTI, Giovanni Antonio, 6977 Ruvigliana (Lugano) (CH)
(74) Representative: Luppi Intellectual Property S.r.l.
(86) International application number: PCT/IB2021/053940
(87) International publication number: WO 2021/229401

(56) References cited:
- CN-U- 206 808 843
- CN-U- 209 421 157
- ES-U- 1 066 445
- US-A- 4 296 693
- US-A1- 2005 161 067
- US-A1- 2011 056 788

## Description

The invention relates to a case with wheels, or a trolley, designed to act as a support for a parasol, a rotatable table, or for an awning.

From the prior art, cases provided with wheels or trolleys are known, intended to contain personal belongings that a user wishes to take on a journey with any means of transport.

On the other hand, cases with wheels are not known that, in addition to being able to contain personal belongings, can be used to convey parasols, a rotatable table and parasol awnings. ES1066445U discloses a parasol with safety box of the type comprising a parasol engageable to a safety box provided with an access door with opening and closing means; characterized in that it comprises a base constituted by a hollow part, as a container, refillable with sand or stones or other heavy material and provided with anchors for the securing of a safety box whose door access comprises an electronic lock provided with: a closing latch, an electronic drive circuit, a digital keypad for entering the opening and closing code and some leds for signalling the opening or closing state of the electronic lock, and in that said electronic lock is electrically powered by a photovoltaic cell disposed at the upper end of the mast of a sun visor.

The object of the present invention is to supply a case that is provided with wheels, which enables a user to easily convey a parasol, a rotatable table and/or a parasol awning and use the case to assemble and support said parasol and/or parasol awning, thus making the conveying and assembly of said parasol, said rotatable table and/or said parasol awning particularly simple and easy, that, without the help of the case according to the invention, are in general inconvenient to safely and efficiently convey and assemble.

The object of the invention is achieved with a case according to claim 1.

Further features and advantages of the invention will be apparent from the following description that is provided merely by way of non-limiting example, with reference to the attached drawings, in which:
Figure 1 is a frontal prospective view of a case according to the invention;
Figure 2 is a rear prospective view of the case in Figure 1;
Figure 3 is a raised view from the right of the case in Figure 1;
Figure 4 is a raised view from the left of the case in Figure 1;
Figure 5 is a prospective view of a case according to the invention that illustrates a first mode of use of the case, in which a parasol and a rotatable table are fitted to and supported on the case;
Figure 6 is a prospective view of a case according to the invention that illustrates a second mode of use of the case, in which a parasol is fitted to and supported on the case, to which two adjacent angles of a parasol awning and a rotatable table are fixed;
Figure 7 illustrates another mode of use of cases according to the invention, in which to and on two cases according to the invention a respective parasol is fitted and supported and to each parasol a corner of a parasol awning is fitted; *[continue at page 2]*
Figure 8 illustrates the use of four cases according to the invention to assemble and support a parasol awning, each corner of the parasol awning being fixed to and supported on a respective case;
Figures 9, 10 and 11 illustrate stabilizing elements for stabilizing the case according to the invention and use thereof, to improve the stability of the case;

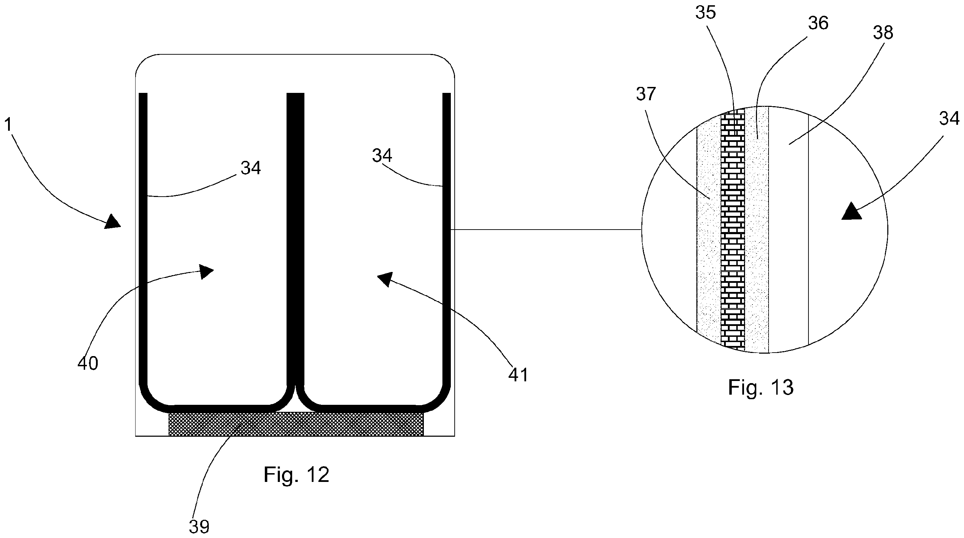

Figure 12 illustrates schematically a further accessory of the case according to the invention, for thermoregulation of the internal space of the case;
Figure 13 is an enlarged detail in Figure 12.

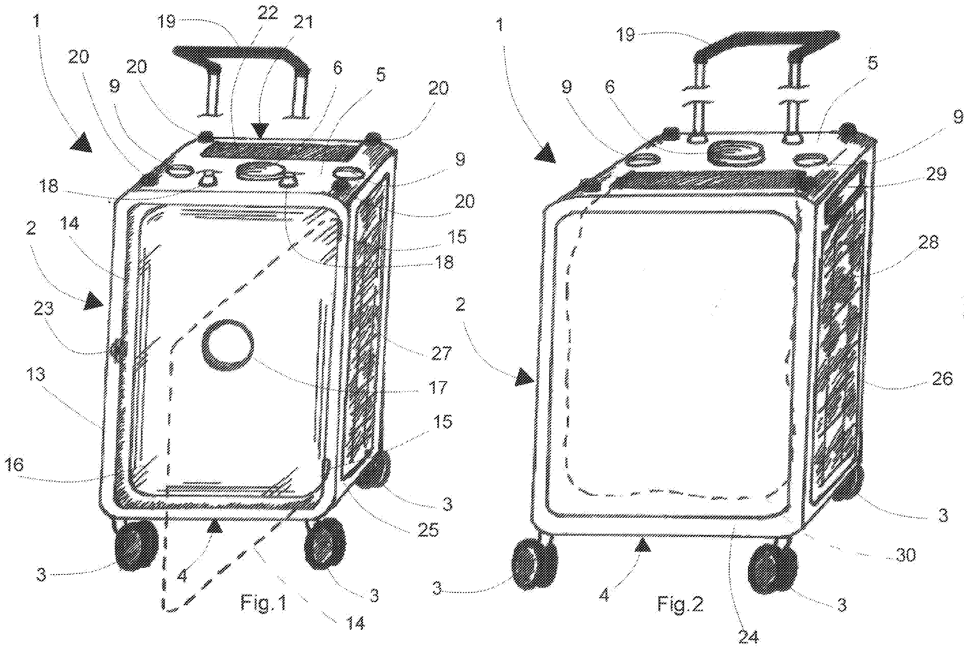

Figure 1 shows, in a frontal prospective view, a case 1 according to the invention is provided with a body 2, for example parallelpipedon-shaped, with a lower face 4 to which four wheels 3 are fixed , each of which is at an angle of the lower face 3. The wheels are used to move easily the case 1 on any running surface, like, for example, sand, gravel, a road or a pavement.

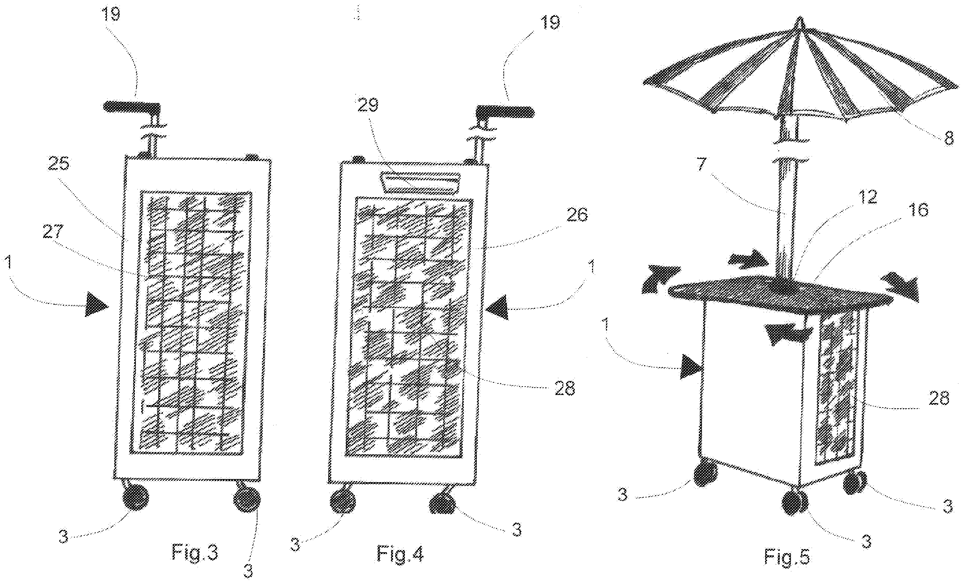

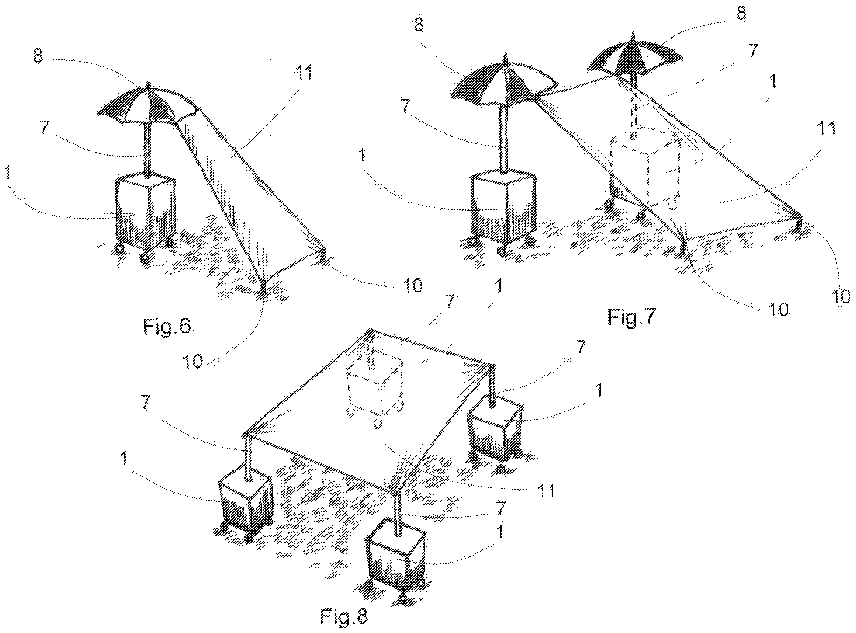

On an upper face 5 of the case 1, opposite the lower face 4, a central hole 6 is provided that is intended to house a first rod 7, for example a tubular rod, to which a parasol 8 (Figures 5, 6 and 7) can be fixed, or can act as a support and fixing element of a parasol awning 11 (Figure 8).

On the sides of the central hole 6, near two opposite sides of the upper face 5, two side holes 9 are provided that are aligned on the central hole 6 and intended to house two further rods 10, for example two further tubular rods, that are usable as support and fixing rods for supporting and fixing a parasol awning 11 (Figures 6 and 7). The rods 10 can also be provided with a metal point for facilitating the insertion of the rods 10 into sand or soil.

The central hole 6 can be provided with a thread to tighten therein a lock nut 12 (Figure 5) that is used to lock the first rod 7, to adjust the height of the parasol 8, with respect to the upper face 5 of the case 1.

A front face 13 of the case 1 is provided with a door 14 that can rotate around a pair of hinges 15, to permit access to an internal space of the case 1 in which compartments can be obtained for housing, for example, a refrigerator, an inverter and rechargeable lithium batteries, or supercapacitors, for supplying the refrigerator and for recharging mobile phones, the parasol, the awning and other objects such as, for example, foldable chairs.

The door 14 is provided with a safety lock 23.

Instead of lithium batteries, so-called supercapacitors can be used, i.e. high capacity capacitors that enable electric energy to be stored and released as a battery, but have the advantage of enabling chargeable batteries to be charged more rapidly and energy to be released more rapidly, ensuring performance that is significantly greater than batteries with the same density of electric charge.

To the front face 13 of the case 1, or to a rear face 24 of the case 1, opposite the front face 13, a stiff container or a net container can be fixed removably, in which the parasol 8, the parasol awning 11, foldable chairs and other objects can be placed, if it is not possible to place the parasol awning 11, foldable chairs and other object, for example because of lack of space, in the internal space of the case 1.

In the internal space, near the door 14, a table 16 is wedgeable, provided with a central opening 17, for example of circular shape. The table 16 can be extracted from the internal space and be fitted to the upper face 5 to act as a resting plane or table. The round central opening 17 is used to permit the transit of the first rod 7, when the table 16 is fitted to the upper side 5 of the case 1. Further, the central opening 17 is used to facilitate the extraction of the table 16 from the internal space of the case 1, enabling a user to grasp the table 16 at the central opening 17.

On the upper face 5, a pair of holes 18 is further provided in which an extractable handle 19 is slidable for conveying the case 1.

The holes 18 are not aligned on the central hole 6, but are moved near the front face 13, such that the extractable handle 19 does not constitute an obstacle to fitting the parasol 8.

At the corners of the upper face 5, resting elements 20 are provided, for example rubber elastic resting elements, on which the table can be rested 16. The resting elements 20 have a height that is greater than the thickness of the lock nut 12 such that the lock nut 12 does not hinder rotation of the table 16.

Lastly, in the upper face 5 an opening 21 is lastly provided, closed by a cover 22. The opening 21 gives access to a further internal space into which a bag 30 is insertable into which sand, gravel or earth can be introduced to give the case 1 ballast so as to grant stability to the case 1 in the event of wind when the parasol 8 is fitted to the case 1 and opened. The internal space can be made accessible by a door placed on a rear face 24 of the case 1, opposite the front face 13.

Instead of the bag 30, a receptacle can be inserted into the aforesaid further internal space, for example a can suitable for containing water, which can act as ballast to give stability to the case 1. The receptacle can be provided with a tap, to enable the water contained therein to be removed and to empty the receptacle.

On a first side face 25 of the case 1 and on a second side face 26 of the case 1, opposite the first side face 25, a first photovoltaic panel 27 and a second photovoltaic panel 28 can be arranged, respectively to supply electric energy to recharge the lithium batteries, or the supercapacitors.

On the first side face 25, or on the second side face 26, an openable and reclosable ash tray 29 can be further provided.

In Figure 5, use is illustrated of a case 1 according to the invention, to fit a parasol 8 and the table 16.

First, the first rod 7 is extracted from the central hole 6. Then, the table16 is extracted from the internal space of the case 1 and arranged on the resting elements 20, so that the central hole 17 of the table 16 is aligned on the central hole 6 of the upper face 5 and on the lock nut 12. It is then passed into the central round hole of the table 17 and in the central hole 6 the first rod 7 and is locked in position by the lock nut 12, so that it protrudes from the upper face 5 for a desired height. Lastly, the parasol 8 is fixed to the first rod 7. The protrusion of the first rod 7 and thus of the parasol 8 with respect to the upper face 5 of the case 1 can be varied by acting on the lock nut.

In Figure 6, use is illustrated of a case 1 according to the invention for fitting a parasol awning 11.

In order to fit the parasol awning 11, the further rods 10 are extracted from the side holes 9 of the upper face 5 of the case 1 and a first end thereof, for example provided with a metal point, is fixed into the soil or into the sand.

Two adjacent corners of the parasol awning 11 are fixed, by fixing means with which the parasol awning 11 is provided, to a second end of the further rods 10, opposite with respect to said first end.

The remaining two corners of the parasol awning 10 are fixed to rings on the parasol 8 that has been previously fitted to the case 1.

In Figure 7, use is illustrated of two cases 1 according to the invention for fitting a parasol awning 11.

In order to fit the parasol awning 11, two rods 10 are extracted from the side holes 9 of one of the cases 1 and a first end thereof, for example provided with a metal point, is fixed into the soil or sand.

Two adjacent angles of the parasol awning 11 are fixed, by fixing means with which the parasol awning 11 is provided, to a second end of the rods 10, opposite to said first end.

The remaining two corners of the parasol awning 11 are fixed to rings provided on two parasols 8, each of which has been previously fitted to a respective case 1.

Figure 8 shows use of four cases 1 according to the invention for fitting a parasol awning 11.

Above all, the first rods 7 of each case 1 are fixed in position in the respective central holes 6 of the upper faces 5 of the cases 1 by the respective lock nuts 12. Subsequently, each corner of the parasol awning 11 is fixed to a respective first rod 7, as is shown in Figure 8. The height from the soil of the parasol awning 11 can be adjusted by modifying the height of the first rods 7 with respect to the cases 1.

In Figures 8, 9, 10, stabilizing elements are illustrated of a variant of the case 1 according to the invention, the aim of which is to improve the stability of the case 1 in the event of wind when the parasol 8 is fitted to the case 1 and open, or when the case 1 is used to fit a parasol awning 11, without any need to provide the case 1 with bulk.

The stabilizing elements consist of four further rods 31, a first end 32 of which is hinged on corner zones of the lower face 4 of the case 1. A second end of each rod 31, opposite with respect to the first end 32, is provided with a peg 33 which is slidable in a direction that is perpendicular to said lower face 4, so as to be planted in a soil on which the case 1 is rested.

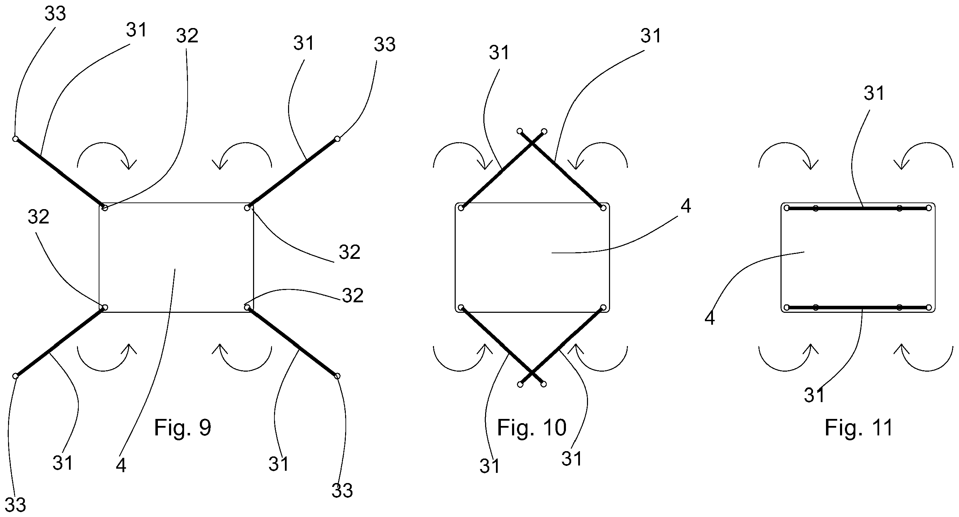

The further rods 31 can be rotated in an extended position, shown in Figure 9, in which they increase, even doubling, the rest surface of the case 1, so as to increase significantly the stability thereof that can be further improved by inserting the pegs 33 into the soil.

The further rods 31 can be rotated in a retracted position, as shown in Figures 10 and 11, in which (Figure 11) they are aligned in pairs parallel to the greater sides of the lower face 4 of the case 1.

The further rods 31 are so hinged as to be able to rotate without interfering with the wheels 3 of the case 1.

In Figure 5, a further version of the case 1 according to the invention is illustrated schematically, in which a system for heating, or cooling, the internal space of the case 1 is provided.

The heating or cooling system consists of a covering 34 of the internal space of the case 1.

The covering 34 consists of a multilayer material that comprises a layer 35 consisting of a plurality of Peltier cells, enclosed between a pair of layers 36 and 37 of a heat conducting material and an outer covering layer 38.

By applying a potential difference to the Peltier cells of the layer 35, a heat transfer is obtained from the internal space of the case 1 to the exterior or vice versa, depending on the sign of the applied potential difference.

In this manner, cooling or heating can be obtained of the internal space, to cool or heat food contained in said internal space.

The heat transfer from the internal space to the exterior of the case 1, or vice versa, can be made more efficient by providing a radiator 39 arranged on the bottom 4 of the case 1, in contact with the covering 34.

In a yet further variant of the case 1, the internal space can be divided into a first compartment 40 and into a second compartment 41, both covered with the covering 34, so as to be able to obtain a heat transfer between the two compartments, so that one of them, for example the first compartment 40, can act as a refrigerated compartment, whilst the second compartment 41 can act as a heated compartment.

Each wheel 3 of the case 1 according to the invention can comprise a tyre, so as to be able to vary the inflation pressure of the tyre, to adapt said deformability to the nature of the surface on which the case 1 rests and is moved. For example, a high inflation pressure is suitable for moving the case 1 on hard surfaces, such as for example a cement or asphalt surface. On the other hand, a low pressure is suitable for moving the case on yielding or uneven surfaces like sand, loose or uneven soil.

In order to adapt easily the inflation pressure of the wheels 3 to the type of surface on which the case 1 has to be moved, the case 1 is provided with a system for varying the inflation pressure with a compressor, provided with connecting means for connecting to the tyres of the wheels 3, configured so as to enable the compressor to increase or decrease the inflation pressure of the tyres.

The compressor is supplied by the lithium batteries or the supercapacitors with which the case 1 is provided.

The case 1 according to the invention can be provided with an armoured container, for example made of manganese alloy, embedded deeply into the structure of the case so that it is not possible to extract the case without destroying the entire structure. Even after the container has been extracted, the toughness of the manganese alloy will make it very difficult to open the container. The armoured container can be used to house valuables. Further, the armoured container can be provided with a satellite localization system with an independent supply, which via specific software, usable on all smartphone and PCs, will show in real time the position of the case, making the theft thereof difficult and making locating the case easy in the event of theft or loss.

The case 1 according to the invention can be provided with a stereo speaker with a Bluetooth interface. Any smartphone or the like can easily interface with the speaker and reproduce multimedia contents with good audio quality.

Lastly, the case 1 can be provided with a USB Host socket designed to charge the electronic devices using the lithium batteries or the supercapacitors of the case 1, the USB Host socket being connected electrically to the lithium batteries or to the supercapacitors.

## Claims

1. Case (1) configured to act as a support for a parasol (8), a rotatable table (16), or a parasol awning (10), comprising a body (2), that has an upper face (5) in which a central hole (6) intended to house a first rod (7) and two side holes (9), aligned on the central hole (6) and intended to house two further rods (10) are provided, **characterized in that** the body (2) comprises a lower face (4) to which four wheels (3) are fixed , each of which is at an angle of the lower face (4).

2. Case (1) according to claim 1, wherein said first rod (7) is configured so as to be able to support a parasol (8) and/or a parasol awning (11) and said further rods (10) are configured to support said parasol awning (11) and/or said first rod (7) and said further rods (10) have a tubular shape, said further rods (10) being provided, at a respective end, with a metal point that is suitable for facilitating the insertion of said end into soil .

3. Case (1) according to claim 1 or 2, **characterized in that** it is provided with an internal space that is accessible from a front face (13) through a door (14) that is rotatable around a pair of hinges (15) and is provided with a safety lock (23).

4. Case (1) according to claim 3, wherein in said internal space a rotatable table (16) is fixed removably that is provided with a round central opening (17), said rotatable table (16) being able to be arranged on said upper face (5) above four resting elements (20) arranged at the corners of said upper face, said round central opening (17) being aligned with said central hole (6) when said rotatable table (16) is rested on said resting elements (20).

5. Case (1) according to one of the preceding claims, further comprising a lock nut (12) that can be fixed in said central hole (6), in particular by a threaded coupling, said lock nut (12) being configured to enable said first rod (7) to be positioned and locked at said central hole (6).

6. Case (1) according to one of the preceding claims depending on claim 3, comprising a further internal space into which a bag (23) can be inserted that is suitable for containing sand, rocks or gravel, or a receptacle that is suitable for containing a liquid, said sand, rocks or gravel, or said liquid acting as ballast to stabilize said case (1), wherein said further internal space is accessible through an opening (21) made in said upper face (5) and reclosable with a cover (22), or through a door made in a rear face (24) of the case (1), opposite with respect to said front face (13).

7. Case (1) according to one of the preceding claims, wherein on a first side face (25) a first photovoltaic panel (27) is arranged and/or on a second side face (26) a second photovoltaic panel (28) is arranged.

8. Case (1) according to claim 9, wherein in said internal space a refrigerator is arranged that can be supplied by lithium batteries, or by supercapacitors, which are also arranged in said internal space, in which said lithium batteries, or said supercapacitors, can be recharged by said first photovoltaic panel (27) and/or said second photovoltaic panel (28).

9. Case (1) according to one of the preceding claims, wherein to said front face (13) or to said rear face (24) a container is fixed removably that is suitable for containing a parasol, a parasol awning, folding chairs and other objects.

10. Case (1) according to one of the preceding claims, **characterized in that** it is provided with stabilizing elements comprising four further rods (31) a first end (32) of which is hinged on corner zones of the lower face (4) of the case (1), wherein a second end of each further rod (31), opposite the first end (32), is provided with a peg (33) that is slidable in a direction that is perpendicular to said lower face (4).

11. Case (1) according to one of the preceding claims, wherein an internal space of the case (1) is provided with a covering (34) consisting of a multilayer material comprising a layer (35) consisting of a plurality of Peltier cells.

12. Case (1) according to claim 11, wherein said layer (35) consisting of Peltier cells is enclosed between a pair of layers (36) and (37) of a heat conducting material, the covering (34) being further is provided with an outer covering layer (38), and/or said internal space is divided into a first compartment (40) and into a second compartment (41), both covered with said multilayer material, and/or a radiator (39) is arranged on the bottom (4) of the case (1), in contact with the covering (34).

13. Case (1) according to one of the preceding claims, wherein each wheel (3) comprises a tyre, wherein the case (1) is provided with a system for varying the inflation pressure of each tyre comprising a compressor and connecting means for connecting the compressor to the tyres of the wheels (3), configured so as to enable the compressor to increase or decrease the inflation pressure of the tyres.

14. Case (1) according to one of the preceding claims, **characterized in that** it is provided with an armoured container so integrated into the structure of the case (1) that it is not possible to extract the armoured container without destroying said structure and wherein said armoured container is provided with a satellite localization system.

15. Case (1) according to one of the preceding claims, **characterized in that** it is provided with a stereo acoustic box with a Bluetooth interface.

16. Case (1) according to any one of claims 8 to 15, **characterized in that** it is provided with a USB Host socket connected electrically to said lithium batteries or to said supercapacitors.

## Patentansprüche

1. Gehäuse (1), das so konfiguriert ist, dass es als Träger für einen Sonnenschirm (8), einen drehbaren Tisch (16) oder ein Sonnenschirmmarkise (10) fungiert, umfassend einen Körper (2), der eine Oberseite (5) aufweist, in der sich ein mittiges Loch (6), das zur Aufnahme einer ersten Stange (7) bestimmt ist, sowie zwei seitliche Löcher (9) vorgesehen sind, die mit dem mittigen Loch (6) ausgerichtet sind und zur Aufnahme von zwei weiteren Stangen (10) bestimmt sind, **dadurch gekennzeichnet, dass** der Körper (2) eine Unterseite (4) umfasst, an der vier Räder (3) befestigt sind, von denen jedes in einem Winkel zur Unterseite (4) steht.

2. Gehäuse (1) nach Anspruch 1, wobei die erste Stange (7) so konfiguriert ist, dass sie imstande ist, einen Sonnenschirm (8) und/oder eine Sonnenschirmmarkise (11) zu tragen, und die weiteren Stangen (10) so konfiguriert sind, dass sie die Sonnenschirmmarkise (11) tragen, und/oder die erste Stange (7) und die weiteren Stangen (10) eine Röhrenform aufweisen, wobei die weiteren Stangen (10) an einem jeweiligen Ende mit einer Metallspitze bereitgestellt sind, die geeignet ist, das Einsetzen des Endes in den Erdboden zu erleichtern.

3. Gehäuse (1) nach Anspruch 1 oder 2, **dadurch gekennzeichnet, dass** es mit einem Innenraum bereitgestellt ist, der von einer Vorderseite (13) durch eine um ein Paar Scharniere (15) drehbare Tür (14) zugänglich ist und mit einer Sicherheitsverriegelung (23) bereitgestellt ist.

4. Gehäuse (1) nach Anspruch 3, wobei im Innenraum ein drehbarer Tisch (16) abnehmbar befestigt ist, der mit einer runden mittigen Öffnung (17) bereitgestellt ist, wobei der drehbare Tisch (16) imstande ist, auf der Oberseite (5) über vier Auflageelemente (20) angeordnet zu werden, die an den Ecken der Oberseite angeordnet sind, wobei die runde mittige Öffnung (17) mit dem mittigen Loch (6) ausgerichtet ist, wenn der drehbare Tisch (16) auf den Auflageelementen (20) aufliegt.

5. Gehäuse (1) nach einem der vorstehenden Ansprüche, das weiter eine Kontermutter (12) umfasst, die insbesondere durch eine Gewindekupplung im mittigen Loch (6) befestigt werden kann, wobei die Kontermutter (12) so konfiguriert ist, dass sie ermöglicht, dass die erste Stange (7) am mittigen Loch (6) positioniert und verriegelt wird.

6. Gehäuse (1) nach einem der vorstehenden Ansprüche in Abhängigkeit von Anspruch 3, umfassend einen weiteren Innenraum, in den ein zur Aufnahme von Sand, Steinen oder Kies geeigneter Beutel (23) oder ein zur Aufnahme einer Flüssigkeit geeignetes Behältnis eingesetzt werden kann, wobei der Sand, die Steine oder der Kies, oder die Flüssigkeit als Ballast zur Stabilisierung des Gehäuses (1) dienen, wobei der weitere Innenraum durch eine in der Oberseite (5) angebrachte und mit einem Deckel (22) wiederverschließbare Öffnung (21) oder durch eine in einer Rückseite (24) des Gehäuses (1) gegenüber der Vorderseite (13) angebrachte Tür zugänglich ist.

7. Gehäuse (1) nach einem der vorstehenden Ansprüche, wobei auf einer ersten Seitenfläche (25) ein erstes Photovoltaikpaneel (27) angeordnet ist und/oder auf einer zweiten Seitenfläche (26) ein zweites Photovoltaikpaneel (28) angeordnet ist.

8. Gehäuse (1) nach Anspruch 9, wobei im Innenraum ein Kühlschrank angeordnet ist, der durch Lithiumbatterien oder durch Superkondensatoren versorgt werden kann, die ebenfalls im Innenraum angeordnet sind, wobei die Lithiumbatterien oder die Superkondensatoren durch das erste Photovoltaikpaneel (27) und/oder das zweite Photovoltaikpaneel (28) aufgeladen werden können.

9. Gehäuse (1) nach einem der vorstehenden Ansprüche, wobei an der Vorderseite (13) oder an der Rückseite (24) ein Behälter abnehmbar befestigt ist, der zur Aufnahme eines Sonnenschirms, einer Sonnenschirmmarkise, von Klappstühlen und anderer Gegenstände geeignet ist.

10. Gehäuse (1) nach einem der vorstehenden Ansprüche, **dadurch gekennzeichnet, dass** es mit Stabilisierungselementen bereitgestellt ist, die vier weitere Stangen (31) umfassen, deren erstes Ende (32) an Eckbereichen der Unterseite (4) des Gehäuses (1) an Scharnieren angelenkt ist, wobei ein zweites Ende jeder weiteren Stange (31), gegenüber dem ersten Ende (32), mit einem Stift (33) bereitgestellt ist, der in einer Richtung verschiebbar ist, die senkrecht zur Unterseite (4) verläuft.

11. Gehäuse (1) nach einem der vorstehenden Ansprüche, wobei ein Innenraum des Gehäuses (1) mit einer Abdeckung (34) bereitgestellt ist, die aus einem mehrschichtigen Material besteht, das eine Schicht (35) umfasst, die aus einer Vielzahl von Peltier-Zellen besteht.

12. Gehäuse (1) nach Anspruch 11, wobei die aus Peltier-Zellen bestehende Schicht (35) zwischen einem Paar Schichten (36) und (37) aus einem wärmeleitenden Material eingeschlossen ist, wobei die Abdeckung (34) weiter mit einer äußeren Deckschicht (38) bereitgestellt ist und/oder der Innenraum in ein erstes Fach (40) und in ein zweites Fach (41) unterteilt ist, die beide mit dem mehrschichtigen Material bedeckt sind, und/oder am Boden (4) des Gehäuses (1) ein Heizkörper (39) in Kontakt mit der Abdeckung (34) angeordnet ist.

13. Gehäuse (1) nach einem der vorstehenden Ansprüche, wobei jedes Rad (3) einen Reifen umfasst, wobei das Gehäuse (1) mit einem System zum Variieren des Fülldrucks jedes Reifens bereitgestellt ist, das einen Kompressor und Verbindungsmittel zum Verbinden des Kompressors mit den Reifen der Räder (3) umfasst, die so konfiguriert sind, dass sie es dem Kompressor ermöglichen, den Fülldruck der Reifen zu erhöhen oder zu verringern.

14. Gehäuse (1) nach einem der vorstehenden Ansprüche, **dadurch gekennzeichnet, dass** es mit einem gepanzerten Behälter bereitgestellt ist, der derart in die Struktur des Gehäuses (1) integriert ist, dass es nicht möglich ist, den gepanzerten Behälter herauszunehmen, ohne die Struktur zu zerstören, und wobei der gepanzerte Behälter mit einem Satellitenlokalisierungssystem bereitgestellt ist.

15. Gehäuse (1) nach einem der vorstehenden Ansprüche, **dadurch gekennzeichnet, dass** es mit einer Stereo-Akustikbox mit einer Bluetooth-Schnittstelle bereitgestellt ist.

16. Gehäuse (1) nach einem der Ansprüche 8 bis 15, **dadurch gekennzeichnet, dass** es mit einer USB-Host-Buchse bereitgestellt ist, die elektrisch mit den Lithiumbatterien oder mit den Superkondensatoren verbunden ist.

## Revendications

1. Caisson (1) configuré pour servir de support à un parasol (8), une table rotative (16), ou un auvent de parasol (10), comprenant un corps (2), qui présente une face supérieure (5) dans laquelle sont prévus un trou central (6) destiné à loger une première tige (7) et deux trous latéraux (9) alignés sur le trou central (6) et destinés à loger deux tiges supplémentaires (10), **caractérisé en ce que** le corps (2) comprend une face inférieure (4) à laquelle sont fixées quatre roues (3), dont chacune forme un angle par rapport à la face inférieure (4).

2. Caisson (1) selon la revendication 1, dans lequel ladite première tige (7) est configurée de manière à pouvoir supporter un parasol (8) et/ou un auvent de parasol (11) et lesdites tiges supplémentaires (10) sont configurées pour supporter ledit auvent de parasol (11) et/ou ladite première tige (7) et lesdites tiges supplémentaires (10) présentent une forme tubulaire, lesdites tiges supplémentaires (10) étant munies, à une extrémité respective, d'une pointe métallique appropriée pour faciliter l'insertion de ladite extrémité dans le sol.

3. Caisson (1) selon la revendication 1 ou 2, **caractérisé en ce qu'**il est muni d'un espace interne qui est accessible depuis une face avant (13) par l'intermédiaire d'une porte (14) qui peut tourner autour d'une paire de charnières (15) et est munie d'un verrou de sécurité (23).

4. Caisson (1) selon la revendication 3, dans lequel dans ledit espace interne est fixée de manière amovible une table rotative (16) munie d'une ouverture centrale circulaire (17), ladite table rotative (16) pouvant être agencée sur ladite face supérieure (5) au-dessus de quatre éléments d'appui (20) disposés aux coins de ladite face supérieure, ladite ouverture centrale circulaire (17) étant alignée sur ledit trou central (6) lorsque ladite table rotative (16) est en appui sur lesdits éléments d'appui (20).

5. Caisson (1) selon l'une des revendications précédentes, comprenant en outre un écrou de verrouillage (12) qui peut être fixé dans ledit trou central (6), en particulier par un raccord fileté, ledit écrou de verrouillage (12) étant configuré pour permettre à ladite première tige (7) d'être positionnée et verrouillée au niveau dudit trou central (6).

6. Caisson (1) selon l'une des revendications précédentes dépendant de la revendication 3, comprenant un espace interne supplémentaire dans lequel peut être inséré un sac (23) qui est approprié pour contenir du sable, des pierres ou du gravier, ou un réservoir qui est approprié pour contenir un liquide, ledit sable, lesdites pierres ou ledit gravier, ou ledit liquide agissant en tant que lest pour stabiliser ledit caisson (1), dans lequel ledit espace interne supplémentaire est accessible par l'intermédiaire d'une ouverture (21) réalisée dans ladite face supérieure (5) et pouvant être refermée avec un couvercle (22), ou par l'intermédiaire d'une porte réalisée dans une face arrière (24) du caisson (1), opposée par rapport à ladite face avant (13).

7. Caisson (1) selon l'une des revendications précédentes, dans lequel sur une première face latérale (25) est agencé un premier panneau photovoltaïque (27) et/ou sur une seconde face latérale (26) est agencé un second panneau photovoltaïque (28).

8. Caisson (1) selon la revendication 9, dans lequel dans ledit espace interne est agencé un réfrigérateur qui peut être alimenté par des batteries au lithium, ou par des supercondensateurs, qui sont également agencés dans ledit espace interne, dans lequel lesdites batteries au lithium, ou lesdits supercondensateurs, peuvent être rechargés par ledit premier panneau photovoltaïque (27) et/ou ledit second panneau photovoltaïque (28).

9. Caisson (1) selon l'une des revendications précédentes, dans lequel à ladite face avant (13) ou à ladite face arrière (24) est fixé de manière amovible un contenant approprié pour contenir un parasol, un auvent de parasol, des chaises pliantes et d'autres objets.

10. Caisson (1) selon l'une des revendications précédentes, **caractérisé en ce qu'**il est muni d'éléments stabilisateurs comprenant quatre tiges supplémentaires (31) dont une première extrémité (32) est articulée sur des zones d'angle de la face inférieure (4) du caisson (1), dans lequel une seconde extrémité de chaque tige supplémentaire (31), opposée à la première extrémité (32), est munie d'une cheville (33) qui peut coulisser dans une direction qui est perpendiculaire à ladite face inférieure (4).

11. Caisson (1) selon l'une des revendications précédentes, dans lequel un espace interne du caisson (1) est muni d'un revêtement (34) consistant en un matériau multicouche comprenant une couche (35) consistant en une pluralité de cellules Peltier.

12. Caisson (1) selon la revendication 11, dans lequel ladite couche (35) consistant en des cellules Peltier est enfermée entre une paire de couches (36) et (37) d'un matériau thermoconducteur, le revêtement (34) étant en outre muni d'une couche de revêtement externe (38), et/ou ledit espace interne est divisé en un premier compartiment (40) et en un second compartiment (41), tous deux revêtus dudit matériau multicouche, et/ou un radiateur (39) est agencé sur le fond (4) du caisson (1), en contact avec le revêtement (34).

13. Caisson (1) selon l'une des revendications précédentes, dans lequel chaque roue (3) comprend un pneu, dans lequel le caisson (1) est muni d'un système pour faire varier la pression de gonflage de chaque pneu comprenant un compresseur et des moyens de liaison pour relier le compresseur aux pneus des roues (3), configurés de manière à permettre au compresseur d'augmenter ou de diminuer la pression de gonflage des pneus.

14. Caisson (1) selon l'une des revendications précédentes, **caractérisé en ce qu'**il est muni d'un contenant blindé intégré à la structure du caisson (1) de telle sorte qu'il soit impossible d'extraire le contenant blindé sans détruire ladite structure et dans lequel ledit contenant blindé est muni d'un système de localisation par satellite.

15. Caisson (1) selon l'une des revendications précédentes, **caractérisé en ce qu'**il est muni d'une enceinte acoustique stéréo avec une interface Bluetooth.

16. Caisson (1) selon l'une quelconque des revendications 8 à 15, **caractérisé en ce qu'**il est muni d'une prise Hôte USB connectée électriquement auxdites batteries au lithium ou auxdits supercondensateurs.
